## Europäisches Patentamt
## European Patent Office
## Office européen des brevets

(19)

(11) Numéro de publication: **0 066 191**
**B1**

(12) **FASCICULE DE BREVET EUROPEEN**

(45) Date de publication du fascicule du brevet:
02.05.85

(51) Int. Cl.⁴: **H 02 M 5/45**, H 02 P 7/62

(21) Numéro de dépôt: **82104377.5**

(22) Date de dépôt: **19.05.82**

(54) **Dispositif de commande d'un convertisseur statique alternatif-alternatif à thyristors alimentant à fréquence variable une machine tournante synchrone.**

(30) Priorité: **27.05.81 FR 8110613**

(43) Date de publication de la demande:
**08.12.82 Bulletin 82/49**

(45) Mention de la délivrance du brevet:
**02.05.85 Bulletin 85/18**

(84) Etats contractants désignés:
**CH DE FR GB LI SE**

(56) Documents cités:
**DE - A - 3 015 144**
**FR - A - 2 385 252**

(73) Titulaire: **CGEE ALSTHOM Société anonyme dite:,**
**13, rue Antonin Raynaud, F-92309 Levallois-Perret (FR)**

(72) Inventeur: **Godfroid, Henri, "La Vue des Vosges" 12, Rue des Sources Salbert, F-90300 Valdoie (FR)**

(74) Mandataire: **Weinmiller, Jürgen et al, Zeppelinstrasse 63, D-8000 München 80 (DE)**

## Description

Dans le document FR-A-2 385 252 pour un «convertisseur statique alternatif-alternatif à thyristors pour moteur synchrone auto-piloté», on a donné un moyen pour diminuer l'effet néfaste sur le couple moteur des commutations du pont alimentant la machine synchrone appelé pont machine. Cet effet néfaste étant provoqué lorsque l'on fonctionne à fréquence basse au dessous de celle pour laquelle le pont machine ne peut plus fonctionner en commutation naturelle, la force électromotrice de la machine étant trop faible et où l'on fonctionne alors en commutation forcée dite parfois séquentielle ou mode cadencée en commandant le pont de thyristors relié au réseau avec des angles $\alpha$ d'allumage des thyristors de telle sorte que l'on soit à ouverture dite «plein onduleur».

La commutation des thyristors du pont machine se fait alors à courant nul. Ce fonctionnement a pour conséquence une annulation du couple moteur à chaque commutation du pont machine dans le domaine des très basses vitesses.

Dans le document précité, on pallie cet inconvénient en ajoutant une connexion auxiliaire reliant le centre du bobinage étoile du stator de la machine synchrone au centre du bobinage étoile du secondaire du transformateur alimentant le pont réseau ou bien, dans le cas où le pont réseau est constitué de deux ponts complets reliés en série, au point assurant la mise en série des deux ponts; et en commandant séparément le demi-pont supérieur et le demi-pont inférieur ou bien en commandant séparément les deux ponts mis en série.

Cela permet de maintenir le courant dans la phase du moteur non commutée, le courant circulant dans l'une des deux connexions reliant le pont réseau au pont machine et dans la connexion auxiliaire. On maintient donc à peu près la moitié du courant nominal et donc aussi la moitié du couple diminuant ainsi sa pulsation.

Le but de la présente invention est de réduire la pulsation du couple à une valeur pratiquement nulle.

L'invention a ainsi pour objet un dispositif de commande d'un convertisseur statique alternatif-alternatif à thyristors alimentant à fréquence variable une machine tournante synchrone et comprenant un pont machine et un pont réseau reliés l'un à l'autre par un conducteur supérieur et un conducteur inférieur et comportant en outre une connexion auxiliaire reliant le point neutre de la machine synchrone à un point du côté pont réseau permettant le retour du courant vers le transformateur alimentant ledit pont réseau par ladite connexion auxiliaire, caractérisé en ce qu'il comprend des moyens de commande du pont réseau de telle façon que la somme des courants dudit conducteur supérieur et dudit conducteur inférieur de liaison des ponts machine et réseau soit égale à une consigne de courant moyen de référence.

L'invention sera bien comprise à la lumière de la description qui va suivre d'un exemple de réalisation, faite ci-après en regard du dessin annexé dans lequel:

La figure 1 représente un convertisseur statique alimentant une machine synchrone permettant l'application d'un dispositif de commande selon l'invention.

La figure 2 donne une représentation graphique des courants dans différents points du convertisseur selon la figure 1.

La figure 3 donne une représentation schématique du dispositif de commande selon l'invention.

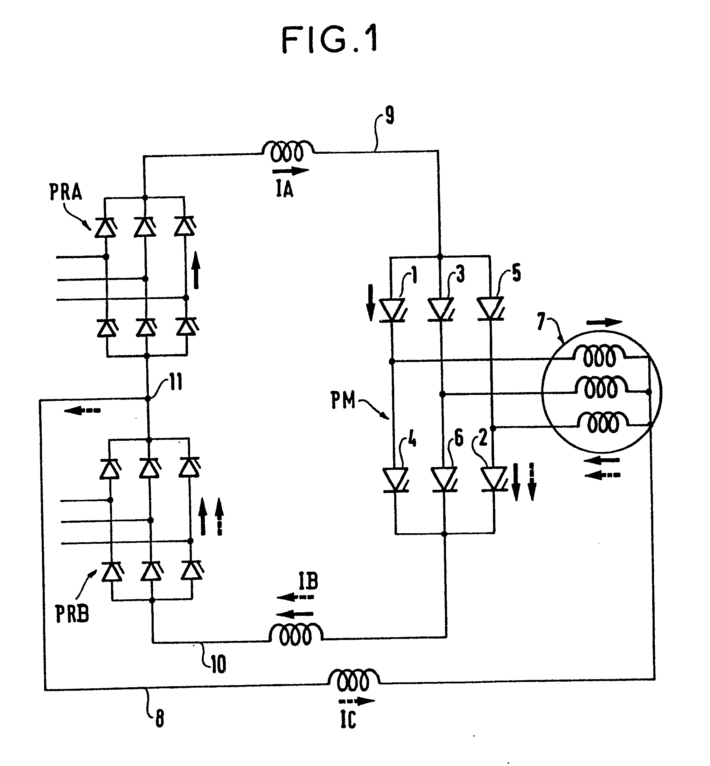

En se référant à la figure 1, le convertisseur statique comprend un pont machine PM composé de six thyristors commandés: 1, 2, 3, 4, 5 et 6 dont les numéros de référence correspondent à l'ordre d'allumage et un pont réseau composé de deux ponts complets à thyristors: un pont réseau A référence PRA et un pont réseau B référence PRB. Le pont machine PM alimente une machine synchrone 7. Les ponts PRA et PRB sont alimentés par un transformateur triphase à double secondaire non représenté. Le pont PM est relié aux ponts PRA et PRB par un conducteur supérieur 9, parcouru par un courant IA et par un conducteur inférieur 10, parcouru par un courant IB. Une connexion auxiliaire 8 relie le point neutre de la machine synchrone 7 au point 11 de mise en série des ponts PRA et PRB.

Dans le document cité plus haut, le principe est d'effectuer les commutations du pont machine PM en annulant le courant non pas dans les deux conducteurs 9 et 10 du circuit intermédiaire, mais dans un seul seulement, le courant de l'autre conducteur pouvant, durant la commutation, emprunter la liaison 8 du point neutre de la machine synchrone 7 au point milieu 11 entre les ponts PRA et PRB.

Selon la présente invention, on force le courant du conducteur 9 ou 10 resté en conduction à s'élever d'une quantité telle qu'elle compense la réduction de couple de la machine 7 due à l'annulation du courant dans une phase de la machine.

Ainsi, soit à réaliser la commutation du thyristor 1 du pont PM vers le thyristor 3. Avant la commutation, les thyristors en état de conduction sont les thyristors 1 et 2 et il faut donc passer à la configuration 2, 3. Pour réaliser cette commutation de 1 vers 3, il faut annuler le courant dans le thyristor 1. Pour cela, on commande le pont réseau PRA en «plein onduleur» ce qui annule le courant IA du conducteur supérieur 9. A ce moment, le courant IB commence à circuler dans la connexion auxiliaire 8 soit le courant IC.

Sur la figure 1, on a représenté par des flèches en trait plein le courant circulant avant la commutation du thyristor 1 vers le thyristor 3 et par des flèches en trait pointillé, le courant circulant au cours de la commutation.

La commande d'angle d'allumage $\alpha$ du pont réseau PRB est faite de telle sorte que le courant IB, s'élève au fur et à mesure que le courant IA diminue de manière à annuler la pulsation du couple à l'arbre de la machine synchrone.

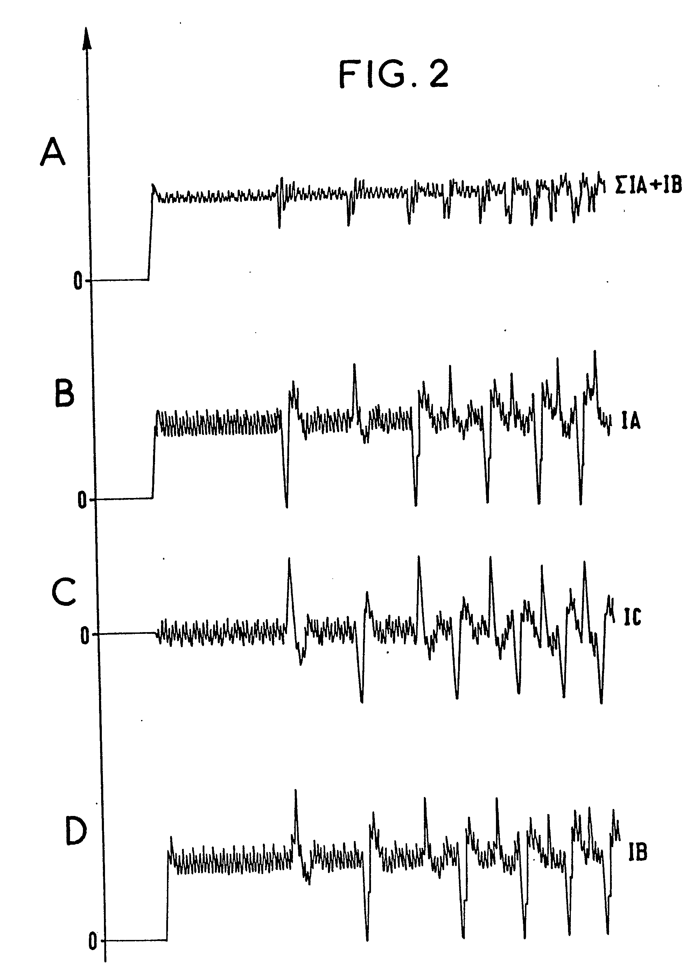

La figure 2 donne une représentation graphique des courants:
— en A est représenté la somme des courants IA et IB
— en B est représenté le courant IA
— en C est représenté le courant IC
— et en D est représenté le courant IB

Sur ce graphique, on voit que le courant IC augmente lorsque le courant IB diminue et vice versa. On voit également que la somme des courants IA et IB

varie peu et que le courant IC est voisin de zéro sauf aux instants de commutation.

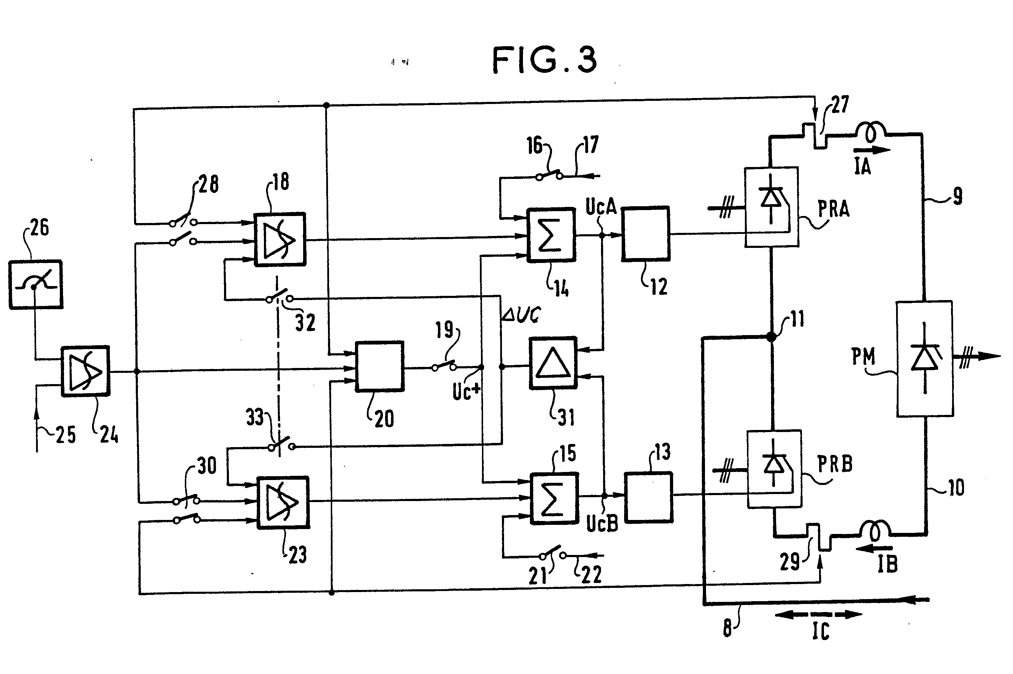

La figure 3 représente un diagramme montrant une réalisation de la commande des ponts PRA et PRB permettant d'obtenir le résultat donné ci-dessus.

Sur cette figure, le pont machine PM ainsi que les ponts réseaux PRA et PRB ont été représentés de manière très simplifiée.

Les ponts réseaux PRA et PRB ont chacun un circuit 12, 13 de commande individuelle d'allumage recevant respectivement une tension UcA, UcB de commande délivrés par des circuits sommateurs 14 et 15.

Le circuit 14 comporte trois entrées, la première reçoit, par l'intermédiaire d'une porte 16, un signal de commande plein onduleur du pont PRA, arrivant sur un conducteur 17, la seconde reçoit le signal de sortie d'un régulateur 18 du courant IA et la troisième est reliée, par l'intermédiaire d'une porte 19, à un circuit comparateur 20. De même, le circuit sommateur 15 comporte également trois entrées, la première par l'intermédiaire d'une porte 21, un signal de commande plein onduleur du pont PRB arrivant sur un conducteur 22, la seconde reçoit le signal de sortie d'un régulateur 23 du courant IB et la troisième est reliée également au circuit comparateur 20 par l'intermédiaire de la porte 19.

Le comparateur 20 compare la somme des courants IA + IB à un signal consigne de courant moyen élaboré par un régulateur de vitesse 24. Le signal de sortie du comparateur 20 est proportionnel à la différence entre ce signal de consigne du courant moyen et la somme des courants IA + IB. Le régulateur de vitesse 24 élabore son signal de sortie à partir de la mesure de la vitesse de la machine synchrone 7 dont on envoie un signal image de cette vitesse sur une entrée 25 et à partir d'un signal de consigne de vitesse élaboré par un circuit 26. Le signal de consigne de courant moyen élaboré par le régulateur de vitesse 24 est également envoyé sur une entrée du régulateur 18 du courant IA qui reçoit également un signal mesure du courant IA élaboré par un réducteur de courant 27. Ces deux signaux sont appliqués au régulateur 18 par une porte 28. De même, le signal de sortie du régulateur de vitesse 24 est aussi envoyé sur une entrée du régulateur 23 du courant IB qui reçoit en outre un signal mesure du courant IB élaboré par un réducteur de courant 29. Ces deux signaux sont aussi appliqués à deux entrées du régulateur 23 par une porte 30.

L'ensemble comporte en outre un comparateur 31 donnant en sortie un signal △UC envoyé d'une part sur une troisième entrée du régulateur 18 par l'intermédiaire d'une porte 32 et d'autre part sur une troisième entrée du régulateur 23 par l'intermédiaire d'une porte 33. Ce signal △UC est proportionnel à la différence entre les signaux d'entrée: UcA et UcB recueillis à la sortie des circuits sommateurs 14 et 15.

Le fonctionnement de l'ensemble est le suivant:

En période de marche à commutation forcée, en marche dite cadencée, donc au dessous d'une certaine vitesse.

1) Cas d'une commutation entre deux des trois thyristors 1, 3 ou 5 (fig. 1).

Les portes 16, 19 et 30 sont fermées et les portes 21, 28, 32 et 33 sont ouvertes.

Le pont PRA est commandé «plein onduleur» par envoi du signal de commande plein onduleur, conducteur 17, sur une entrée du circuit sommateur 14. Le pont PRB reçoit une consigne supplémentaire UC + provenant du circuit comparateur 20, qui commande une élévation du courant IB compensant la disparition momentanée du courant IA.

Le régulateur 23 du courant IB est en fonctionnement, par contre le régulateur 18 du courant IA est mis hors fonctionnement par l'ouverture de la porte 28 d'entrée de consigne et de la mesure du courant. Le régulateur conserve son état de sortie précédant l'instant de la commutation et reprend son fonctionnement normal à la fin de la commutation, le signal UcA en sortie du circuit 14 reprenant ainsi la valeur qu'il avait au moment du début de commutation du pont machine PM du côté des thyristors 1, 3, 5.

La consigne Uc + est élaboré par le comparateur 20 qui compare la somme des courants instantanés IA + IB à la consigne de courant moyen de référence provenant du circuit 24.

2) Dans le cas d'une commutation du pont machine PM du côté des thyristors 4, 6 et 2, les portes 21, 28 et 19 sont fermées et les portes 16, 30, 32 et 33 sont ouvertes, le fonctionnement est symétrique de celui du cas exposé ci-dessus. Sur la figure 3, les portes ont été représentées dans leut état correspondant à une commutation du côté des thyristors 1, 3, 5.

En fonctionnement normal c'est-à-dire en commutation naturelle, en dehors de la marche cadencée, les portes 32, 33, 28 et 30 sont fermées et toutes les autres sont ouvertes, le circuit comparateur 31 entre alors en service pour forcer le fonctionnement à ouverture identique des angles d'allumage des ponts PRA et PRB, il n'est en effet généralement pas requis, en dehors de la marche cadencée, de commander différemment les deux ponte PRA et PRB.

Bien entendu, le pont réseau peut être constitué par un seul pont et dans la liaison 8 relie le point neutre de la machine synchrone au point neutre du secondaire, monté en étoile, du transformateur d'alimentation.

**Revendications**

1. Dispositif de commande d'un convertisseur statique alternatif-alternatif à thyristors alimentant à fréquence variable une machine tournante synchrone (7) et comprenant un pont machine (PM) et un pont réseau (PRA, PRB) reliés l'un à l'autre par un conducteur supérieur (9) et un conducteur inférieur (10) et comportant une connexion auxiliaire (8) reliant le point neutre de la machine synchrone à un point (11), du côté pont réseau, permettant le retour du courant vers le transformateur alimentant ledit pont réseau, par ladite connexion auxiliaire, caractérisé en ce qu'il comprend des moyens de commmande pu pont réseau de telle façon que la somme des courants (IA + IB) dudit conducteur supérieur (9) et dudit conducteur inférieur (10) de liaison des ponts machine et réseau soit égale à une consigne de courant moyen de référence.

2. Dispositif selon la revendication 1, caractérisé en ce que ledit pont réseau est formé de deux ponts complets à thyristors (PRA et PRB) en série, lesdits moyens de commande comprenant un régulateur de vitesse (24) fournissant une consigne de courant moyen de référence qui est comparé dans un circuit comparateur (20) à la somme des courants (IA + IB) dudit conducteur supérieur et dudit conducteur inférieur, la sortie dudit comparateur (20) étant envoyé vers deux circuits sommateurs (14, 15) alimentant respectivement un circuit de commande d'allumage (12, 13) des ponts (PRA et PRB), chaque circuit sommateur recevant en outre respectivement la sortie d'un circuit régulateur du courant (18, 23) du conducteur supérieur ou du conducteur inférieur et un signal de commande d'ouverture plein onduleur.

## Patentansprüche

1. Steuervorrichtung für einen statischen Thyristor-Frequenzwandler, der eine Synchronmaschine (7) mit variabler Frequenz speist und eine Maschinenbrücke (PM) und eine Netzbrücke (PRA, PRB), die miteinander durch einen oberen Leiter (9) und einen unteren Leiter (10) verbunden sind, und eine Hilfsleitung (8) aufweist, die den neutralen Punkt der Synchronmaschine mit einem Punkt (11) auf der Seite der Netzbrücke verbindet, so dass durch diese Hilfsleitung die Rückkehr des Stroms zum Transformator, der die Netzbrücke versorgt, möglich wird, dadurch gekennzeichnet, dass sie Mittel zur Steuerung der Netzbrücke aufweist, derart, dass die Summme der Ströme (IA + IB) des oberen Leiters (9) und des unteren Leiters (10) der Verbindung zwischen der Maschinen- und der Netzbrücke gleich einem Referenzsollwert des mittleren Stroms ist.

2. Vorrichtung nach Anspruch 1, dadurch gekennzeichnet, dass die Netzbrücke aus zwei vollständigen Thyristorbrücken (PRA und PRB) in Reihe besteht, wobei die Steuermittel einen Geschwindigkeitsregler (24) aufweisen, der einen Referenzsollwert des mittleren Stroms liefert, wobei dieser Wert in einem Vergleichskreis (20) mit der Summe der Ströme (IA + IB) des oberen und des unteren Leiters verglichen wird und wobei der Ausgang des Komparators (20) an zwei Summierkreise (14, 15) führt, die je einen Zündsteuerkreis (12, 13) der Brücken (PRA und PRB) speisen, und dass jeder Summierkreis ausserdem den Ausgang eines Stromregelkreises (18, 23) des oberen oder des unteren Leiters sowie ein Steuersignal zur Steuerung der betreffenden Brücke in vollem Wechselrichterbetrieb erhält.

## Claims

1. An apparatus for controlling a static AC/AC thyristor converter for supplying power of a variable frequency to a synchronous rotating machine (7) and comprising a machine bridge (PM) and a mains bridge (PRA, PRB) which are connected to each other by an upper conductor (9) and a lower conductor (10), and comprising an auxiliary connection (8) which connects the neutral point of the synchronous machine to a point (11) at the mains bridge and via which point current can be returned to the transformator which supplies power to said mains bridge, characterized in that it comprises means for controlling the mains bridge in such a way that the sum of the currents (IA + IB) of said upper (9) and lower conductor (10) interconnecting the machine and the mains bridges is equal to a set value of the average reference current.

2. An apparatus according to claim 1, characterized in that said mains bridge is formed by the series connection of two complete thyristors bridges (PRA and PRB), said control means including a speed regulator (24) supplying a set value of the average reference current which is compared in a comparator circuit (20) with the sum of the currents (IA + IB) of said upper conductor and of said lower conductor, the output of said comparator (20) being applied to two summing circuits (14, 15) which each feed one ignition control circuit (12, 13) for one of the bridges (PRA and PRB), each summing circuit further receiving respectively the output of a current regulator circuit (18, 23) of the upper conductor or of the lower conductor and a signal to control the full operation of the respective bridge.

# FIG.1

# FIG. 2

A     ΣIA+IB

B     IA

C     IC

D     IB

# FIG.3

0 066 191